# EUROPEAN PATENT APPLICATION

(11) **EP 4 215 678 A1**
(43) Date of publication of application: **26.07.2023**
(21) Application number: 22162716.9
(22) Date of filing: 17.03.2022
(51) Int. Cl.: E03C 1/04

(54) **FAUCET**

(30) Priority: 24.01.2022 CN 202210082214
(71) Applicant: Fujian Xihe Sanitary Ware Technology Co., Ltd., QuanZhou, Fujian (CN)
(72) Inventor: LIN, Xiaofa, QuanZhou, Fujian (CN); LIN, Xiaoshan, QuanZhou, Fujian (CN); YU, Kaishi, QuanZhou, Fujian (CN); SHI, Liangjian, QuanZhou, Fujian (CN); JI, Hejun, QuanZhou, Fujian (CN); DENG, Xiaoqing, QuanZhou, Fujian (CN); LIU, Qiqiao, QuanZhou, Fujian (CN)
(74) Representative: Murgitroyd & Company

(57) **Abstract**

A faucet includes: a shell having an installation through hole, a water outlet channel and a communication port, wherein the water outlet channel is located at a side of the installation through hole and is communicated with the installation through hole via the communication port; a valve body provided with a water inlet passage and a water outlet passage, wherein the valve body is installed in the installation through hole, and a water outlet of the water outlet passage is communicated with the communication port; a fixed pipe joint, one end of which being located in the installation through hole and the other end of which being located outside the installation through hole; and one connector or a plurality of connectors connected in sequence, which is/are located in the installation through hole, and one end of the connector(s) being connected with the valve body and the other end of the connector(s) being connected with the fixed pipe joint. For faucets with different heights, the differences are only the number of connectors and the heights of the shells. By replacing shells with different heights and respectively increasing or decreasing the number of connectors used, faucets with different heights can be manufactured, thus resulting in lower development cost and shorter development period of the faucet.

## Description

### Technical Field

The disclosure relates to the field of kitchen and bathroom technology, in particular to a faucet.

### Background

Components of different washbasin faucets have relatively poor versatility with each other, which is also the main reason for the high development cost and long development period of washbasin faucets.

### Summary

Embodiments of the disclosure provide a faucet, which can solve the problems of high development cost and long development period of faucets.

A faucet provided by an embodiment of the disclosure includes: a shell having an installation through hole, a water outlet channel and a communication port, the water outlet channel being located at a side of the installation through hole and communicated with the installation through hole via the communication port; a valve body provided with a water inlet passage and a water outlet passage, the valve body being installed in the installation through hole, and a water outlet of the water outlet passage being communicated with the communication port; a fixed pipe joint, one end of the fixed pipe joint being located within the installation through hole and the other end of the fixed pipe joint being located outside the installation through hole; and one connector or a plurality of connectors connected in sequence, which is/are located in the installation through hole, one end of the connector(s) being connected with the valve body and the other end of the connector(s) being connected with the fixed pipe joint.

In an exemplary embodiment, the shell is a first shell, and there is one connector.

In an exemplary embodiment, the shell is a second shell, and there are a plurality of connectors.

In an exemplary embodiment, the connector is a connecting cylinder.

In an exemplary embodiment, one end of the connecting cylinder is provided with a first external thread and the other end thereof is provided with a first internal thread, the valve body is provided with a second internal thread connected with the first external thread, the fixed pipe joint is provided with a second external thread connected with the first internal thread, and a locking sleeve is screwed on the second external thread.

In an exemplary embodiment, a snapping part is provided at the water outlet of the water outlet passage, and the snapping part is snapped on a port wall of the communication port.

In an exemplary embodiment, the snapping part is two symmetrically arranged arc-shaped snaps. Convex curved surfaces of the two snaps are opposite to each other, and the ends of the two snaps are snapped on the port wall of the communication port in the communication port.

In an exemplary embodiment, the faucet further includes a water outlet pipe disposed in the water outlet channel. One end of the water outlet pipe facing the valve body is provided with a snap-mating part, a snapping part is provided at a water outlet of the water outlet passage, the snapping part is snapped on the snap-mating part, and a water inlet of the water outlet pipe is communicated with the water outlet of the water outlet passage.

In an exemplary embodiment, the snap-mating part is two symmetrically arranged snapping grooves, the two snapping grooves are located outside the water outlet of the water outlet passage, the snapping part is two symmetrically arranged snapping hooks, the two snapping hooks are located outside the water inlet of the water outlet pipe, the two snapping hooks pass through the communication port and are snapped into the two snapping grooves, and the water inlet of the water outlet pipe is communicated with the water outlet of the water outlet passage by insertion.

In an exemplary embodiment, the water outlet pipe is a plastic pipe and the shell is a metal shell.

In an exemplary embodiment, the water inlet passage includes a first water inlet channel and a second water inlet channel, and the water outlet passage is a mixed water outlet channel.

In an exemplary embodiment, the faucet further includes: a first water inlet pipe internally passing through the fixed pipe joint, a water outlet of the first water inlet pipe being communicated with a water inlet of the first water inlet channel; a second water inlet pipe internally passing through the fixed pipe joint, a water outlet of the second water inlet pipe being communicated with a water inlet of the second water inlet channel.

In an exemplary embodiment, the faucet further includes a limiter. The water outlet of the first water inlet pipe is inserted into the water inlet of the first water inlet channel, and the water outlet of the second water inlet pipe is inserted into the water inlet of the second water inlet channel. The limiter is insertable into the valve body and mates with the first water inlet pipe and the second water inlet pipe to prevent the first water inlet pipe, the second water inlet pipe and the valve body from separating.

According to the technical schemes of the embodiments of the disclosure, for faucets with different heights, the differences are only the number of connectors and the heights of the shells. By replacing the shells with different heights and respectively increasing or decreasing the number of the connectors used, faucets with different heights can be manufactured. In this process, only the shells need to be re-developed, which can solve the problems of high development cost and long development period of faucets.

Other features and advantages of the disclosure will be set forth in the following description, and in part will be obvious from the description, or may be learned by practice of the disclosure. The objects and other advantages of the present disclosure can be realized and obtained by the structures particularly indicated in the description and drawings.

### Brief Description of Drawings

The drawings are used to provide a further understanding of the technical schemes of the present disclosure and constitute a part of the description. They are used together with the embodiments of the present application to explain the technical schemes of the present disclosure, and do not constitute a restriction on the technical schemes of the present disclosure.
FIG. 1 is a schematic view of the three-dimensional structure of a faucet according to an embodiment of the present disclosure;
FIG. 2 and FIG. 3 are schematic exploded structural views of the faucet shown in FIG. 1;
FIG. 4 is a schematic sectional structural view of the faucet shown in FIG. 1 in a cut-away position;
FIG. 5 is a schematic perspective view of the three-dimensional structure of a shell in FIG. 1;
FIGS. 6 and 7 are schematic views of the three-dimensional structure of a valve seat in FIG. 1;
FIG. 8 is a schematic sectional structural view of the faucet shown in FIG. 1 in another cut-away position;
FIG. 9 is a schematic view of the three-dimensional structure of a faucet according to another embodiment of the present disclosure;
FIG. 10 is a schematic sectional structural view of the faucet shown in FIG. 9;
FIG. 11 is a schematic view of the three-dimensional structure of a faucet according to yet another embodiment of the present disclosure;
FIG. 12 is a schematic partial exploded structural view of the faucet shown in FIG. 11;
FIG. 13 is a schematic view of the three-dimensional structure of the shell in FIG. 11;
FIGS. 14 and 15 are schematic views of the three-dimensional structure of the valve seat in FIG. 11;
FIG. 16 is a schematic view of the three-dimensional structure of a water outlet pipe in FIG. 11;
FIG. 17 is a schematic sectional structural view of the faucet shown in FIG. 11 in a cut-away position; and
FIG. 18 is a schematic sectional structural view of the faucet shown in FIG. 11 in another cut-away position.

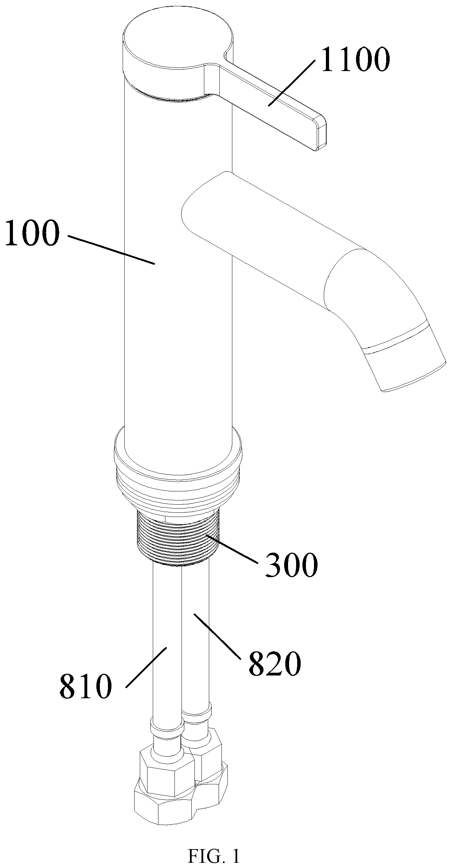

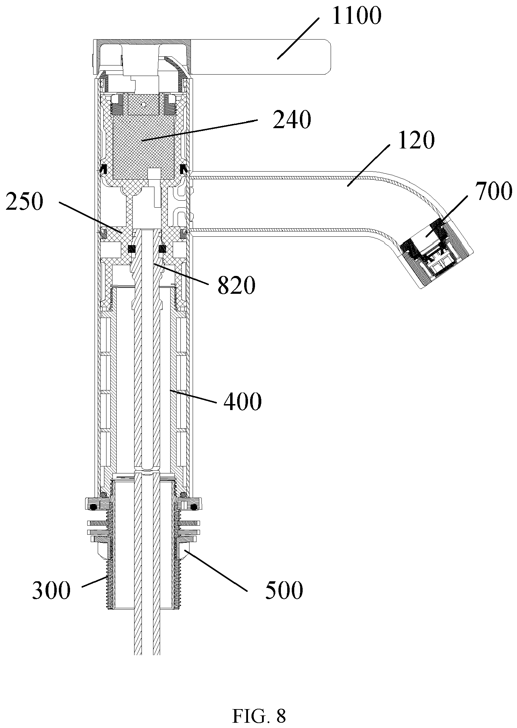

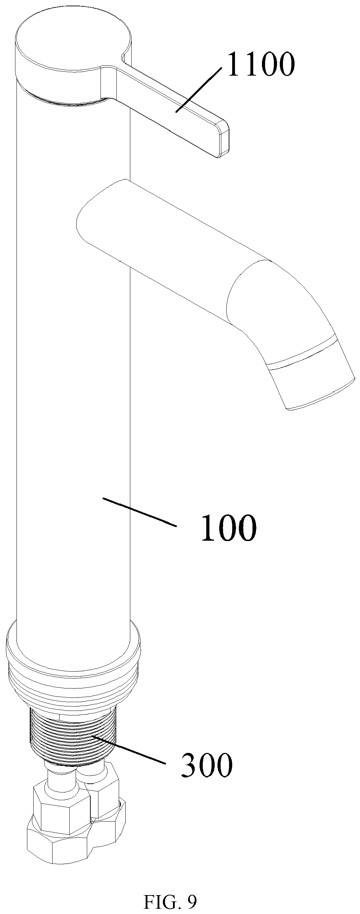

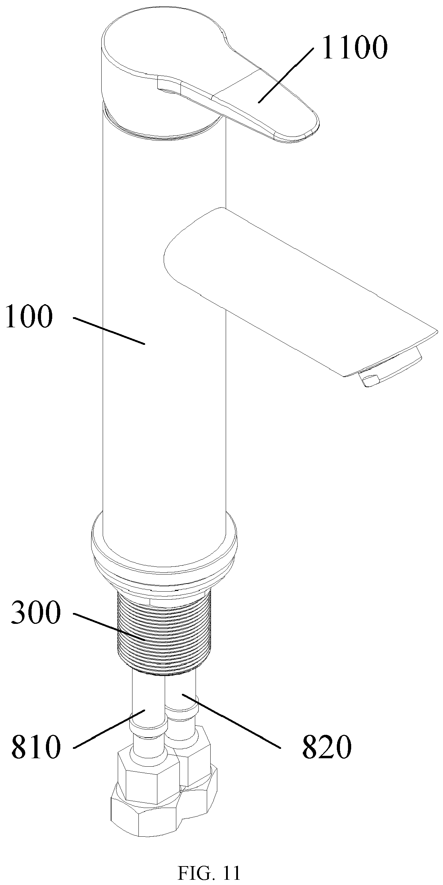

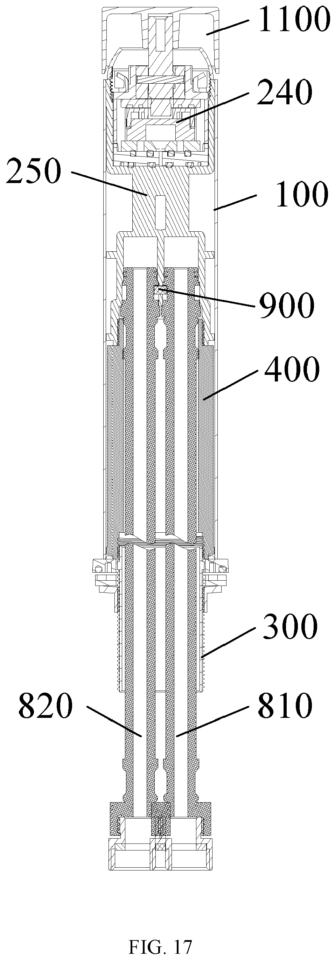

The correspondence between reference signs and component names in FIG. 1 to FIG. 18 is as follows:
100 shell, 110 installation through hole, 120 water outlet channel, 130 communication port, 140 positioning notch, 200 valve body, 210 mixed water outlet channel, 220 snapping part, 230 positioning protrusion, 240 valve core, 250 valve seat, 260 locking nut, 300 fixed pipe joint, 400 connector, 500 locking sleeve, 600 water outlet pipe, 610 snap-mating part, 700 bubbler assembly, 810 first water inlet pipe, 820 second water inlet pipe, 830 hose joint, 840 annular limiting groove, 900 limiter, 1010 washer, 1020 seal ring, 1030 base, 1100 operating handle, 1200 decorative cap.

### Detailed Description

In order to make the purposes, technical schemes and advantages of the present disclosure clearer, embodiments of the present disclosure will be described in detail below with reference to the accompanying drawings. It should be noted that the embodiments in the present application and the features in the embodiments may be combined with each other arbitrarily if there is no conflict.

As shown in FIGS. 1-18, a faucet provided by an embodiment of the present disclosure includes: a shell 100 having an installation through hole 110, a water outlet channel 120 and a communication port 130, wherein the water outlet channel 120 is located at a side of the installation through hole 110 and is communicated with the installation through hole 110 via the communication port 130; a valve body 200 provided with a first water inlet channel, a second water inlet channel and a mixed water outlet channel 210, wherein the valve body is installed in the installation through hole 110, and a water outlet of the mixed water outlet channel 210 is communicated with the communication port 130; a fixed pipe joint 300, wherein one end of the fixed pipe joint is located within the installation through hole 110 and the other end thereof is located outside the installation through hole 110; one connector or a plurality of connectors 400 connected in sequence, which is/are located within the installation through hole 110, and one end of the connector(s) 400 is connected with the valve body 200 and the other end thereof is connected with the fixed pipe joint 300; and a locking sleeve 500 located outside the installation through hole 110 and detachably installed on the fixed pipe joint 300.

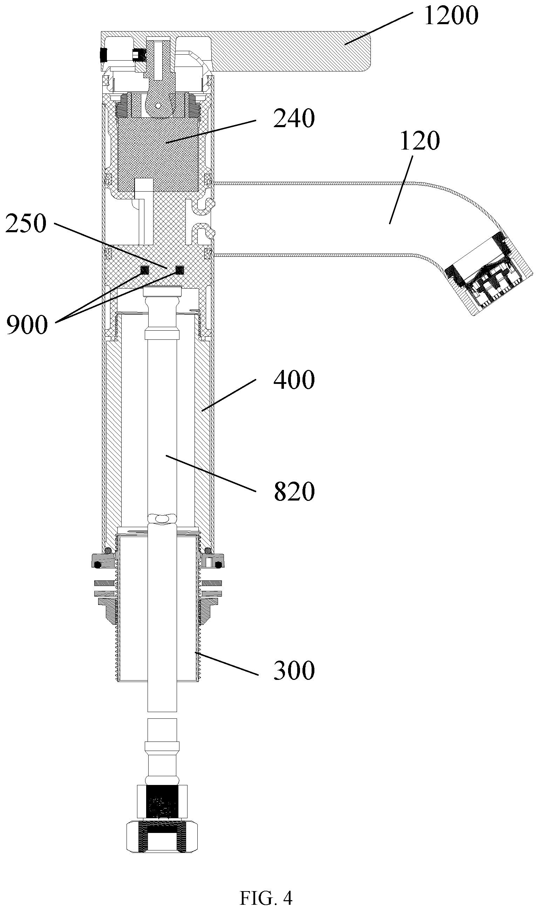

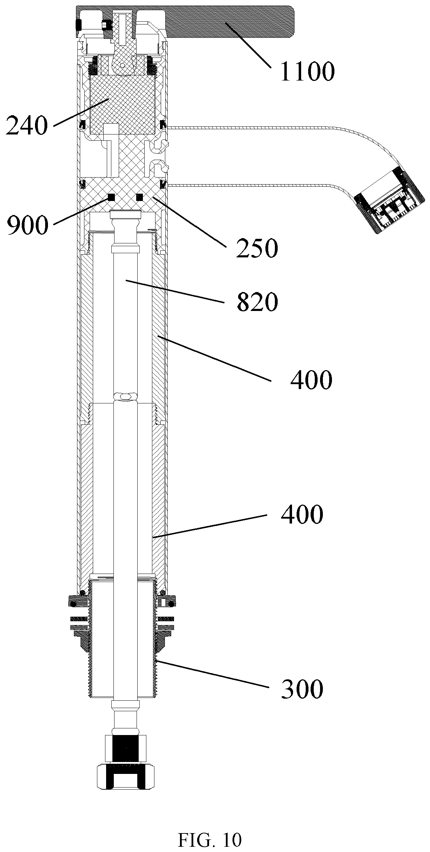

As shown in FIGS. 4 and 10, for faucets with different heights, the differences are only the number of connectors 400 and the heights of the shells 100. By replacing the shells 100 with different heights and respectively increasing or decreasing the number of the connectors 400 used, faucets with different heights can be manufactured. In this process, only the shells 100 need to be re-developed, which can solve the problems of high development cost and long development period of faucets.

The shell 100 may be a first shell 100 (with height a) and there is one connector 400; alternatively, the shell 100 may be a second shell 100 (with height b) and there are two connectors 400; alternatively, the shell 100 is another second shell 100 (with height c), and there are three connectors 400, and so on. Different shells 100 have different heights (that is, a, b and c are different).

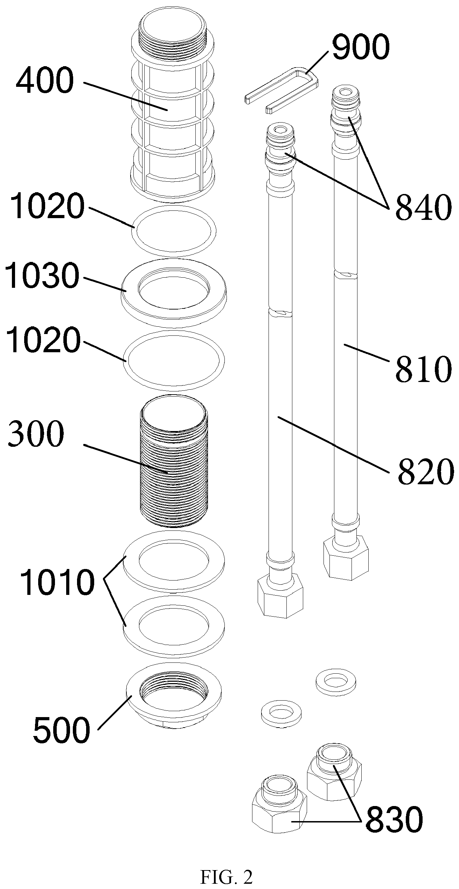

In an exemplary embodiment, as shown in FIGS. 2, 4, 8, 10, 17 and 18, the connector 400 is a connecting cylinder. One end of the connecting cylinder is provided with a first external thread, the other end thereof is provided with a first internal thread. A lower end of the valve body 200 is provided with a second internal thread connected with the first external thread, an outer side of the fixed pipe joint 300 is provided with a second external thread connected with the first internal thread, and a locking sleeve 500 is screwed on the second external thread.

As shown in FIGS. 4, 17 and 18, when there is one connector 400, the second internal thread is connected with the first external thread, and the first internal thread is connected with the second external thread.

As shown in FIG. 10, when there are a plurality of connectors 400, the first internal thread and the first external thread of adjacent ends of the adjacent connectors 400 are connected with each other. One end of the combined structure formed by connecting is a first external thread and the other end is a first internal thread, and then the second internal thread is connected with the first external thread, and the first internal thread is connected with the second external thread.

In an exemplary embodiment, as shown in FIGS. 4, 5, 7, 8 and 10, a snapping part 220 is provided at the water outlet of the mixed water outlet channel 210. The snapping part 220 is snapped on a port wall of the communication port 130, so that the valve body 200 may be fixed in the shell 100. Such fixing manner of the valve body 200 and the shell 100 is simple and easy to realize.

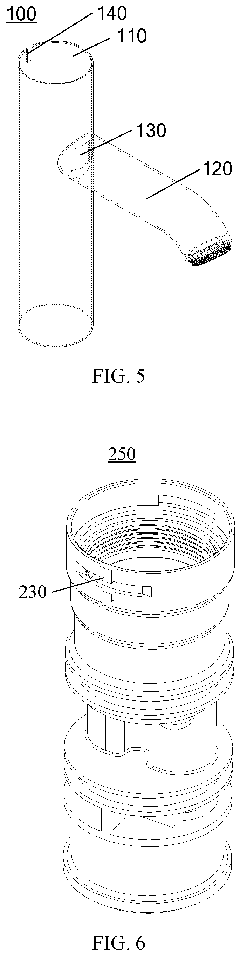

In an embodiment, as shown in FIGS. 5 and 6, the valve body 200 is provided with a positioning protrusion 230, and a positioning notch 140 is provided on the hole wall of one end (i.e., an upper end) of the installation through hole 110. The positioning protrusion 230 is inserted downward into the positioning notch 140, so as to realize that the water outlet of the mixed water outlet channel 210 is directly aligned with the communication port 130, and it is also beneficial for the snapping part 220 to be accurately and quickly snapped on the port wall of the communication port 130. A water inlet of the first water inlet channel and a water inlet of the second water inlet channel both face the other end (i.e., lower end) of the installation through hole 110.

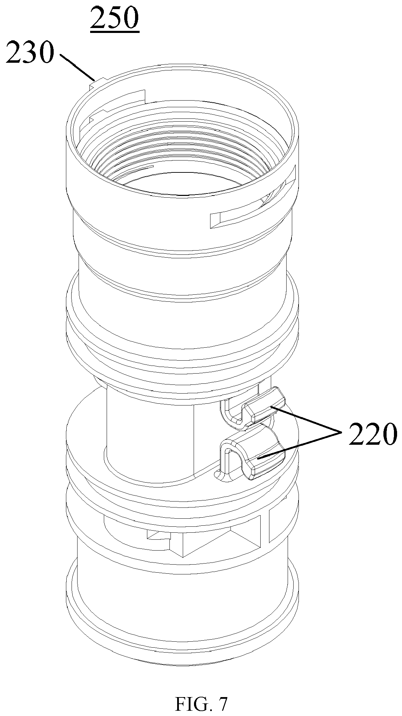

As shown in FIGS. 4 and 7, the snapping part 220 is two symmetrically arranged arc-shaped snaps. Convex curved surfaces of the two snaps are opposite to each other, and the ends of the two snaps are snapped on the port wall of the communication port 130 in the communication port 130.

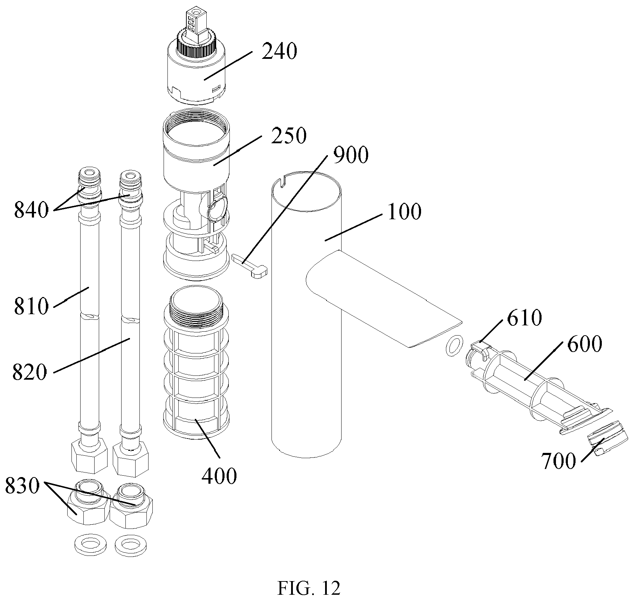

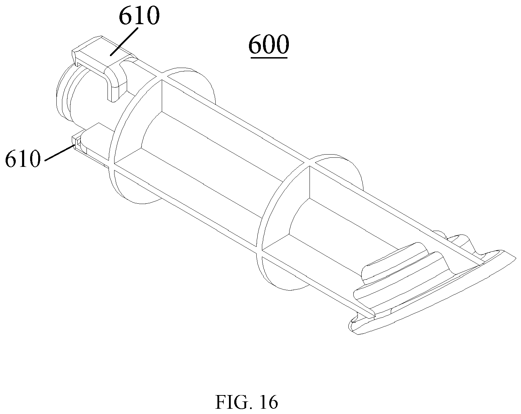

In another exemplary embodiment, as shown in FIGS. 12 and 16, the faucet further includes a water outlet pipe 600 arranged in the water outlet channel 120. One end of the water outlet pipe 600 facing the valve body 200 is provided with a snap-mating part 610, and the snapping part 220 is provided at the water outlet of the mixed water outlet channel 210. The snapping part 220 is snapped on the snap-mating part 610. A water inlet of the water outlet pipe 600 is communicated with the water outlet of the mixed water outlet channel 210, and the mixed water flowing out of the mixed water outlet channel 210 is transmitted outward along the water outlet pipe 600 without contacting the shell 100.

In an embodiment, as shown in FIGS. 12, 16 and 18, the water inlet of the water outlet pipe 600 and the water outlet of the mixed water outlet channel 210 are connected by insertion, and sealed by a seal ring. Such connection manner is simple and easy to realize.

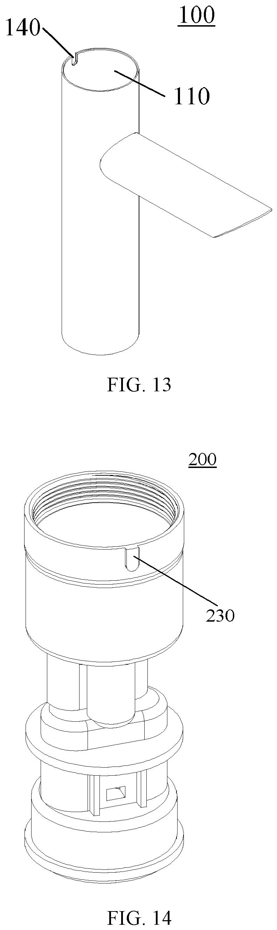

In an embodiment, as shown in FIGS. 13 and 14, the valve body 200 is provided with a positioning protrusion 230, and a positioning notch 140 is provided on the hole wall of one end (i.e., an upper end) of the installation through hole 110. The positioning protrusion 230 is inserted downward into the positioning notch 140, so as to realize that the water outlet of the mixed water outlet channel 210 is directly aligned with the communication port 130, and it is also beneficial for the snapping part 220 to be accurately and quickly snapped on the snap-mating part 610. The water inlet of the first water inlet channel and the water inlet of the second water inlet channel both face the other end (i.e., lower end) of the installation through hole 110.

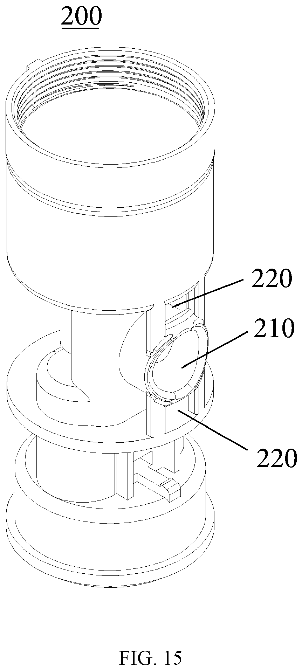

In an embodiment, as shown in FIGS. 15 and 16, the snap-mating part 610 is two symmetrically arranged snapping grooves, and the snapping part 220 is two symmetrically arranged snapping hooks. The two snapping hooks are snapped into the two snapping grooves by passing through the communication port 130, so that the valve body 200 is fixed in the shell 100 and the water outlet pipe is fixed in the water outlet channel 120.

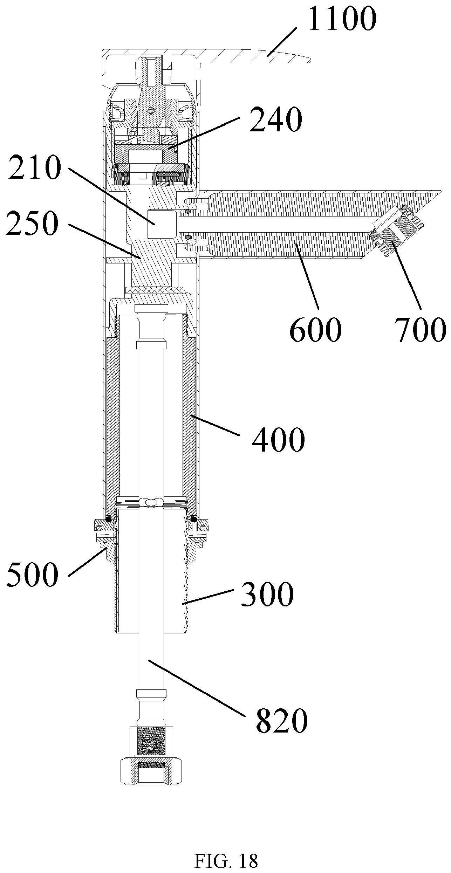

In an embodiment, as shown in FIGS. 12 and 18, an end of the water outlet pipe 600 is located at an end of the water outlet channel 120, and a bubbler assembly 700 is installed at the end of the water outlet pipe 600.

In an embodiment, the water outlet pipe 600 is a plastic pipe or a metal pipe or the like.

In an exemplary embodiment, the shell 100 is a metal shell or a plastic shell or the like.

In an exemplary embodiment, as shown in FIGS. 1, 2, 9, 10, 11, 12, 17 and 18, the faucet further includes: a first water inlet pipe 810 internally passing through the fixed pipe joint 300, a water outlet of the first water inlet pipe 810 being communicated with the water inlet of the first water inlet channel, and a water inlet of the first water inlet pipe 810 extending downward out of the fixed pipe joint 300 and being installed with a hose joint 830; a second water inlet pipe 820 internally passing through the fixed pipe joint 300, a water outlet of the second water inlet pipe 820 being communicated with the water inlet of the second water inlet channel, and a water inlet of the second water inlet pipe 820 extending downward out of the fixed pipe joint 300 and being installed with a hose joint 830.

In an exemplary embodiment, as shown in FIGS. 2, 4, 8, 10, 12 and 17, the faucet further includes a limiter 900. The water outlet of the first water inlet pipe 810 is inserted into the water inlet of the first water inlet channel, and the water outlet of the second water inlet pipe 820 is inserted into the water inlet of the second water inlet channel. The limiter 900 is insertable into the valve body 200 along a radial direction of the installation through hole 110 and mates with the first water inlet pipe 810 and the second water inlet pipe 820 to snap the first water inlet pipe 810 and the second water inlet pipe 820 onto the valve body 200, thereby preventing the first water inlet pipe 810, the second water inlet pipe 820 and the valve body 200 from separating.

In an embodiment, as shown in FIGS. 2 and 12, the limiter 900 is a T-shaped latch or a U-shaped latch, and the first water inlet pipe 810 and the second water inlet pipe 820 are provided with annular limiting grooves 840 to mate with the limiter 900. The limiter 900 is inserted into the annular limiting grooves 840 to prevent the first water inlet pipe 810, the second water inlet pipe 820 and the valve body 200 from separating.

In an exemplary embodiment, as shown in FIG. 2, a washer 1010, two seal rings 1020, a base 1030 and other components are provided between the shell 100 and the locking sleeve 500 for snapping and fixing the faucet on a washbasin. The locking sleeve 500 is a hexagonal nut.

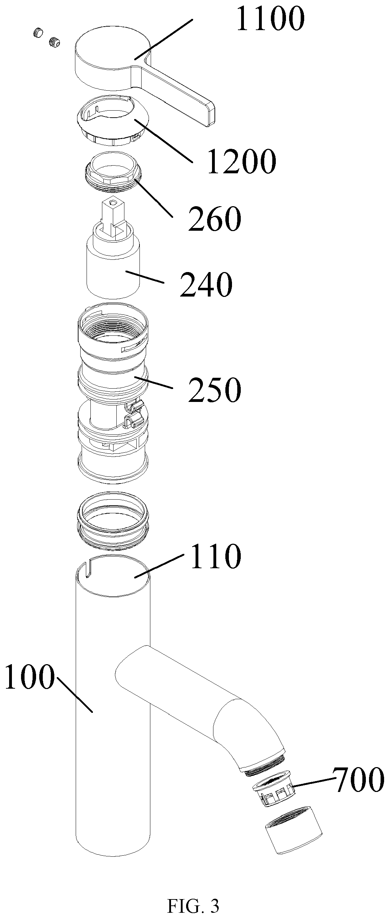

In an exemplary embodiment, as shown in FIGS. 3 and 12, the valve body 200 includes a valve core 240, a valve seat 250 and a locking nut 260 which are assembled together. The valve core 240 is installed in the valve seat 250, and the locking nut 260 is installed on the valve seat 250 and presses against the valve core 240 to prevent the valve core 240 from separating from the valve seat 250. An operating handle 1100 is installed on the valve core 240, and a decorative cap 1200 is installed at the end of the installation through hole 110 where the valve body 200 is disposed. The decorative cap 1200 is used to improve the aesthetics of the faucet.

An embodiment of the disclosure also provides a faucet (not shown in the figures), which is different from the faucet provided by the above embodiments in that the valve body is provided with a water inlet passage and a water outlet passage. The water inlet passage is a cold water inlet channel and the water outlet passage is a cold water outlet channel, which can also achieve the purpose of the present application. Its purpose does not depart from the design concept of the disclosure, so it will not be repeated here, and it should also be within the scope of protection of this application.

To sum up, according to the technical schemes of the embodiments of the disclosure, for faucets with different heights, the differences are only the number of connectors and the heights of the shells. By replacing the shells with different heights and respectively increasing or decreasing the number of the connectors used, faucets with different heights can be manufactured. In this process, only the shells need to be re-developed, which can solve the problems of high development cost and long development period of faucets.

In the description of the present disclosure, it should be noted that the orientation or position relationships indicated by the terms "upper", "lower", "one side", "the other side", "one end", "the other end", "side", "relative" , "four corners" , "periphery", "square structure" and the like are based on the orientation or position relationships shown in the drawings, which are only for convenience of describing the present disclosure and simplifying the description, rather than indicating or implying that the structure referred has the specific orientation, or is constructed and operated in the specific orientation, and thus cannot be interpreted as a limitation on the present disclosure.

In the description of the embodiments of the present disclosure, unless otherwise explicitly specified and limited, the terms "connection", "direct connection", "indirect connection", "fixed connection", "installation" and "assembly" should be understood in a broad sense, for example, they may be fixed connection, detachable connection or integrated connection; and the terms "installation", "connection" and "fixed connection" may be direct connection, or indirect connection through an intermediary, or may be an internal communication between two elements. For those of ordinary skills in the art, the specific meanings of the above terms in the present disclosure can be understood according to specific situations.

Although implementations disclosed in the present disclosure are described above, the described contents are only implementations adopted for facilitating the understanding of the present disclosure, and are not intended to limit the present disclosure. Any person skilled in the art to which the present disclosure pertains may make any modifications and changes in the form and details of implementation, but the scope of patent protection of the present disclosure shall still be defined by the appended claims.

## Claims

1. A faucet, comprising:
a shell (100) having an installation through hole (110), a water outlet channel (120) and a communication port (130), wherein the water outlet channel (120) is located at a side of the installation through hole (110) and is communicated with the installation through hole (110) via the communication port (130);
a valve body (200) provided with a water inlet passage and a water outlet passage, wherein the vale body (200) is installed in the installation through hole (110), and a water outlet of the water outlet passage is communicated with the communication port (130);
a fixed pipe joint (300), one end of the fixed pipe joint (300) being located within the installation through hole (110) and the other end of the fixed pipe joint (300) being located outside the installation through hole (110); and
one connector (400) or a plurality of connectors (400) connected in sequence, which is/are located in the installation through hole (110), wherein one end of the connector (400) or the plurality of connectors (400) connected in sequence is connected with the valve body (200), and the other end of the connector (400) or the plurality of connectors (400) connected in sequence is connected with the fixed pipe joint (300).

2. The faucet according to claim 1, wherein,
the shell (100) is a first shell, and there is one connector (400); or
the shell (100) is a second shell, and there are a plurality of connectors (400).

3. The faucet according to claim 1 or claim 2, wherein the connector (400) is a connecting cylinder.

4. The faucet according to claim 3, wherein,
one end of the connecting cylinder is provided with a first external thread and the other end of the connecting cylinder is provided with a first internal thread, the valve body (200) is provided with a second internal thread connected with the first external thread, the fixed pipe joint (300) is provided with a second external thread connected with the first internal thread, and a locking sleeve (500) is screwed on the second external thread.

5. The faucet according to claim 1 or claim 2, wherein a snapping part (220) is provided at the water outlet of the water outlet passage, and the snapping part (220) is snapped on a port wall of the communication port (130).

6. The faucet according to claim 5, wherein the snapping part (220) is two symmetrically arranged arc-shaped snaps, convex curved surfaces of the two snaps are opposite to each other, and ends of the two snaps are snapped in the communication port (130) and on the port wall of the communication port (130).

7. The faucet according to claim 1 or claim 2, further comprising:
a water outlet pipe (600) disposed in the water outlet channel (120), wherein one end of the water outlet pipe (600) facing the valve body (200) is provided with a snap-mating part (610), a snapping part (220) is provided at the water outlet of the water outlet passage, the snapping part (220) is snapped on the snap-mating part (610), and a water inlet of the water outlet pipe (600) is communicated with the water outlet of the water outlet passage.

8. The faucet according to claim 7, wherein the snap-mating part (610) is two symmetrically arranged snapping grooves, the two snapping grooves are located outside the water outlet of the water outlet passage, the snapping part (220) is two symmetrically arranged snapping hooks and the two snapping hooks are located outside the water inlet of the water outlet pipe (600), the two snapping hooks pass through the communication port (130) and are snapped into the two snapping grooves, and the water inlet of the water outlet pipe (600) is communicated with the water outlet of the water outlet passage by insertion.

9. The faucet according to claim 1 or claim 2, wherein the water inlet passage comprises a first water inlet channel and a second water inlet channel, and the water outlet passage is a mixed water outlet channel (210).

10. The faucet according to claim 9, further comprising:
a first water inlet pipe (810) internally passing through the fixed pipe joint (300), wherein a water outlet of the first water inlet pipe (810) is communicated with a water inlet of the first water inlet channel;
a second water inlet pipe (820) internally passing through the fixed pipe joint (300), wherein a water outlet of the second water inlet pipe (820) is communicated with a water inlet of the second water inlet channel; and
a limiter (900), wherein the water outlet of the first water inlet pipe (810) is inserted into the water inlet of the first water inlet channel, the water outlet of the second water inlet pipe (820) is inserted into the water inlet of the second water inlet channel, and the limiter (900) is insertable into the valve body (200) and mates with the first water inlet pipe (810) and the second water inlet pipe (820) to prevent the first water inlet pipe (810), the second water inlet pipe (820) and the valve body (200) from separating.
